Europäisches Patentamt

**European Patent Office**

**Office européen des brevets**

(11) Publication number: **0 246 832**
**A2**

(12) # EUROPEAN PATENT APPLICATION

(21) Application number: **87304367.3**

(22) Date of filing: **18.05.87**

(51) Int. Cl.³: **G 01 N 21/88**
**G 06 K 9/00, G 01 R 31/28**

(30) Priority: **19.05.86 GB 8612088**

(43) Date of publication of application:
**25.11.87 Bulletin 87/48**

(84) Designated Contracting States:
**BE DE FR IT NL SE**

(71) Applicant: **MARCONI INSTRUMENTS LIMITED**
**Longacres Hatfield Road**
**St. Albans Hertfordshire, AL4 0JN(GB)**

(72) Inventor: **O'dell, Glenn Merlin**
**21 Belmont Gardens**
**Edinburgh Scotland(GB)**

(74) Representative: **MacKenzie, Ian Alastair Robert**
**The General Electric Company, p.l.c. Central Patent**
**Department Wembley Office Hirst Research Center East**
**Lane**
**Wembley Middlesex HA9 7PP(GB)**

(54) Pattern Alignment generator.

(57) The invention concerns apparatus for comparing two patterns translated into electronic data streams, one pattern being a Reference Pattern with which the other pattern, referred to as an Inspection Pattern, is to be compared. The apparatus comprises means for reading each of the patterns pixel and includes first comparison means (90) for comparing a Reference Pattern pixel with a plurality of adjacent pixels in the Reference Pattern to determine the presence or absence of edges, means (80) for comparing pixels of the Reference Pattern with nominally corresponding pixels of the Inspection Pattern to determine whether or not the pixels are the same, and alignment means (81) for automatically incrementing or decrementing the coordinates of the pixels of the Inspection Pattern to compensate for discrepancies between edges in the Reference Pattern and nominally corresponding edges in the Inspection Pattern thereby to bring the two patterns into effective alignment.

Fig.1.

MFD/2341 EPC

## Pattern Alignment Generator

The present invention concerns apparatus for comparing patterns and in particular, though not exclusively, bit patterns generated by scanning. This apparatus according to the invention is capable of comparing a pattern generated by optically or otherwise scanning an article with a reference pattern which may also be generated by a scanning process.

The invention can thus be applied in a number of fields. The initial application is in the inspection of printed circuit boards (PCB's).

At present these are inspected visually by a human inspector. He or she typically scans a PCB rapidly, searching for eye-catching anomalies. When one of these is seen it is inspected in detail using magnification and measuring tools to determine whether the flaw is cause for repair or rejection. The process is tedious and imposes considerable strain on inspectors.

Accordingly the invention has for one object to provide a system for automatically comparing nominally similar digital patterns.

Accordingly the present invention consists in apparatus for comparing two patterns translated into electronic data streams, one pattern being a Reference Pattern with which the other pattern, referred to as an Inspection Pattern, is to be compared, the apparatus comprising means for reading each of the patterns pixel by pixel, means for comparing a reference pattern pixel with a plurality of adjacent pixels in the Reference Pattern to determine the presence or absence of edges, means for comparing any pixel of the Reference Pattern with the nominally corresponding pixel of the Inspection Pattern to determine whether or not the pixels are the same, and means for automatically incrementing or decrementing the coordinates of the pixels of the Inspection Pattern to compensate for discrepancies between edges in the Reference Pattern and nominally corresponding edges in the Inspection Pattern thereby to bring the two patterns into effective alignment.

The reference feature is an edge in the Reference Pattern, an edge being represented by the transition between the values of two adjacent pixels. Thus the first comparison means may compare each pixel in the Reference Pattern with the four pixels surrounding it to determine both the presence and orientation of such a transition.

In accordance with yet another aspect of the invention means are provided for reading each pattern serially, and for reading the serial data, into a storage array containing a plurality of lines of data in parallel, in order to compare contiguous pixels in adjacent lines, to detect edges.

In order that the present invention may be more readily understood, an embodiment thereof will now be described by way of example and with reference to the accompanying drawings, in which:

Figure 1 is a perspective view of a Printed Circuit Board inspection machine incorporating the present invention,

Figure 2 is a block diagram of the main elements of the machine of Figure 1,

Figure 3 is a section through a scanning head,

Figure 4 illustrates potential flaws in printed circuit boards,

Figure 5 illustrates potential alignment problems when comparing two printed circuit boards,

Figure 6 is a more detailed block diagram of the flaw detector circuit shown in Figure 2,

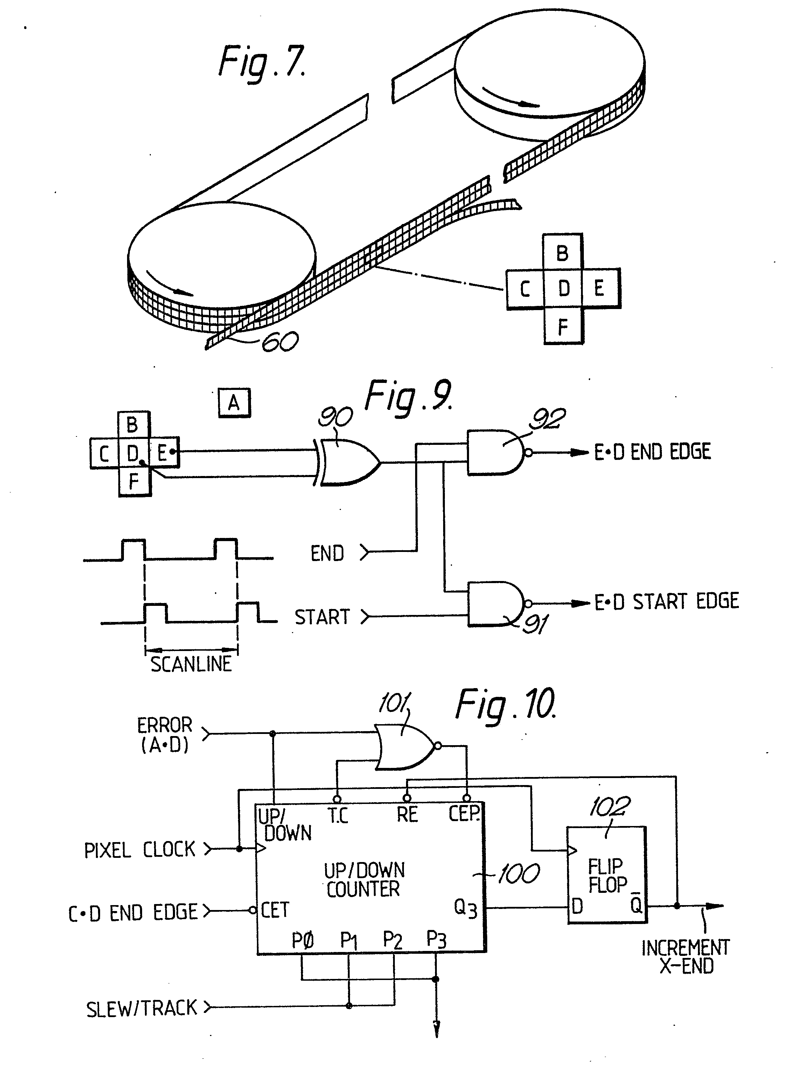

Figure 7 is a symbolic representation of the operation of the Array Register,

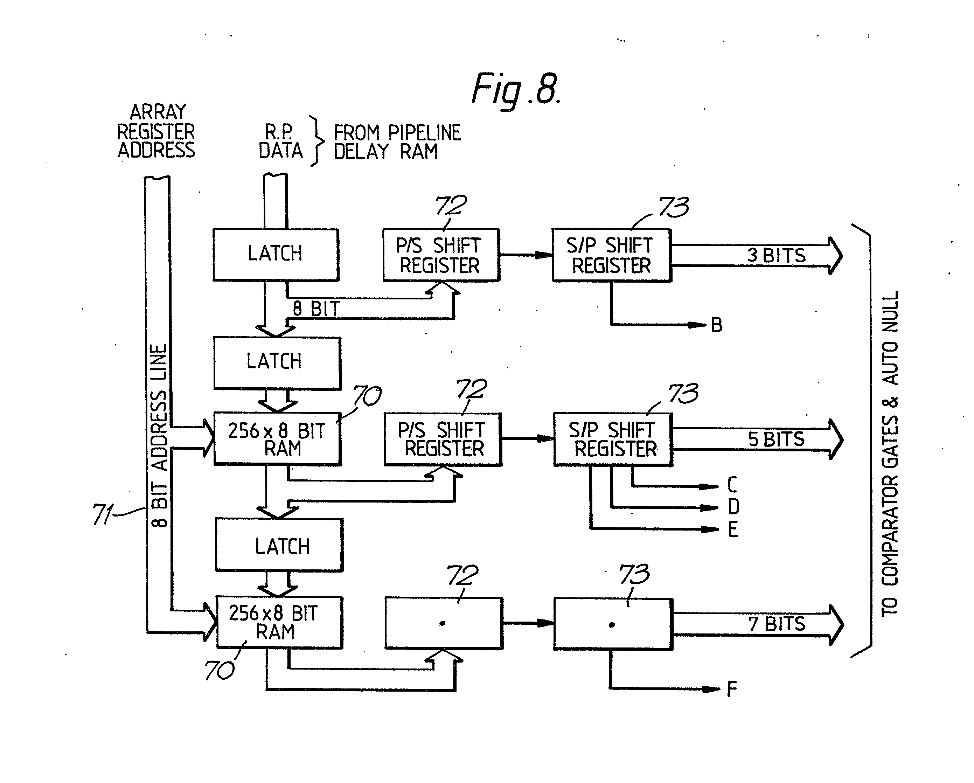

Figure 8 is a block diagram of an array register,

Figure 9 is a block diagram of an edge detector circuit,

Figure 10 is a block diagram of a polling counter,

Figure 11 is a block diagram of a circuit for aligning two digital patterns,

Figure 12 is a block diagram of an offset generator forming part of the circuit of Figure 11,

Figure 13 is a symbolic representation of flaw detection.

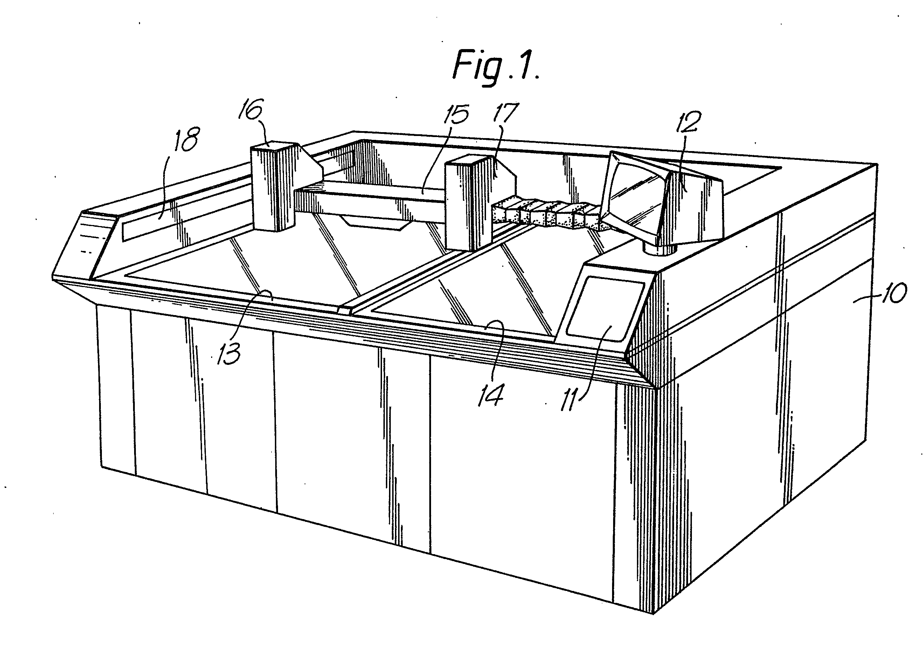

Referring now to Figure 1 of the drawings this shows an automatic PCB inspection machine comprising a main body 1 housing power supplies, servo-motors and electronic control and computational equipment. The machine includes a control panel 11 and a video display unit 12. Two flat beds 13 and 14 are located on the upper surface of the main body 10. A cross-piece 15 forming part of an X-Y transport mechanism carries a pair of scanning heads 16 and 17. The cross-piece 15 can itself be moved along guides 18 to provide the necessary X-Y movement. The two heads 16 and 17 cannot be moved independently and so during scanning perform identical, though off-set scanning movements over their associated beds 13 and 14.

The beds 13 and 14 are intended to carry nominally similar printed circuit boards (PCBs). The PCB on bed 14 is of known, approved quality and is subsequently referred to as the Reference Pattern (RP). Note: PCB artwork or phototool may be used as RP. Bed 13 carries the PCB to be inspected and which is called the Inspection Pattern (IP).

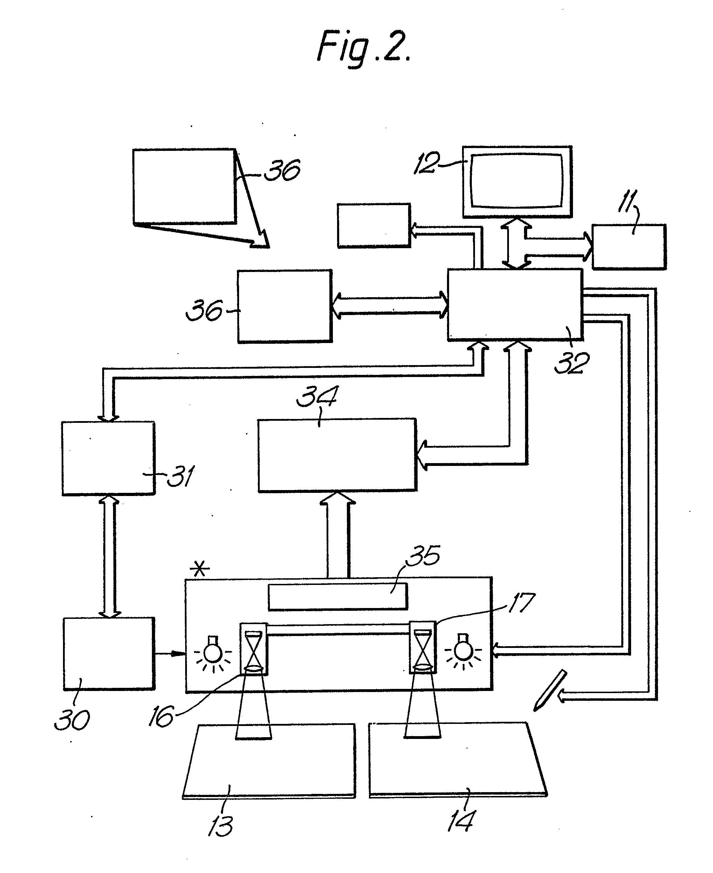

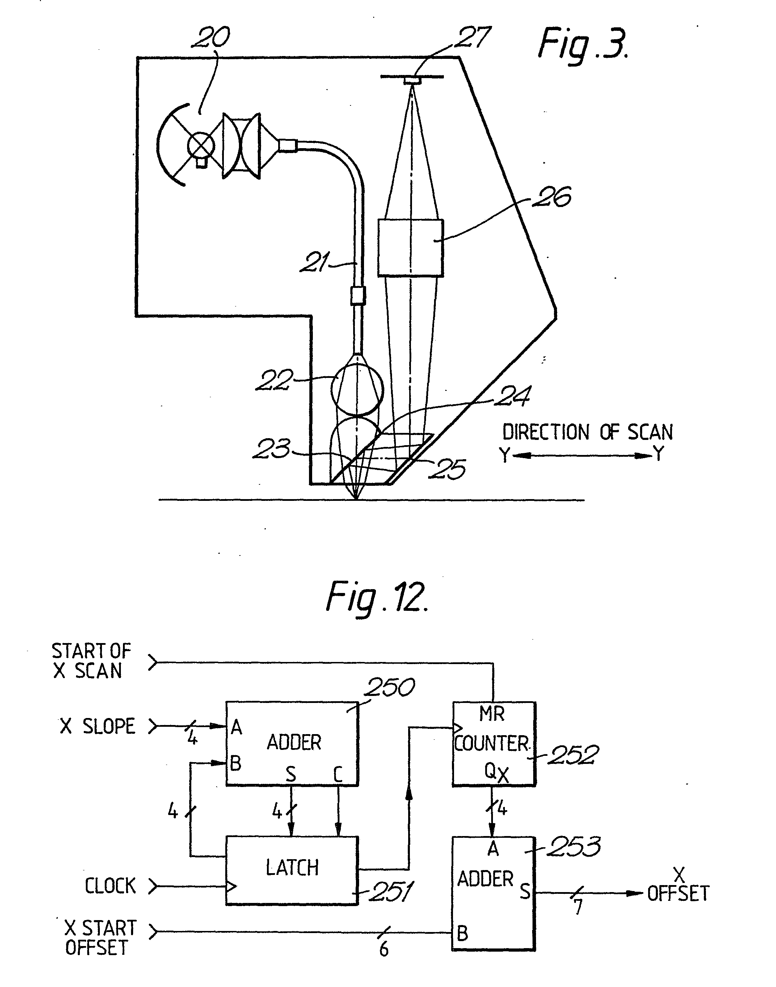

Referring now to Figure 2 of the drawings this block diagram again shows the beds 13, 14 and scanning heads 16, 17. Also shown diagrammatically are the X-Y transport mechanism 30, its associated controller 31, and a central processor 32. This controls the illumination of the PCBs by lamps 20 also a fault marking arrangement 33. The processor 32 receives data with respect to flaws from a flaw memory 34 fed by the flaw detector electronics 35. The processor 32 also interacts with the video display unit 12 and other items such as overhead electronics (timing, power) 36, the control panel 11 and the X-Y controller 31. The processor 32's main function is to analyse discrepancies between the two scanned patterns.

The inspection procedure starts with the operator selecting a good PCB as a Reference Pattern. The reference board and the board to be inspected are located accurately on their respective beds. On switching the machine to inspection mode the machine causes its heads 16, 17 to scan the two boards simultaneously in boustrophedon fashion. As this is done the machine compares the Inspection Pattern with the Reference Pattern for discrepancies which would indicate flaws. When a flaw is detected it is analysed with respect to preset parameters and PCB specifications. If the flaw falls outside acceptable limits it is classified as a fault. The procedure is repeated for every new PCB.

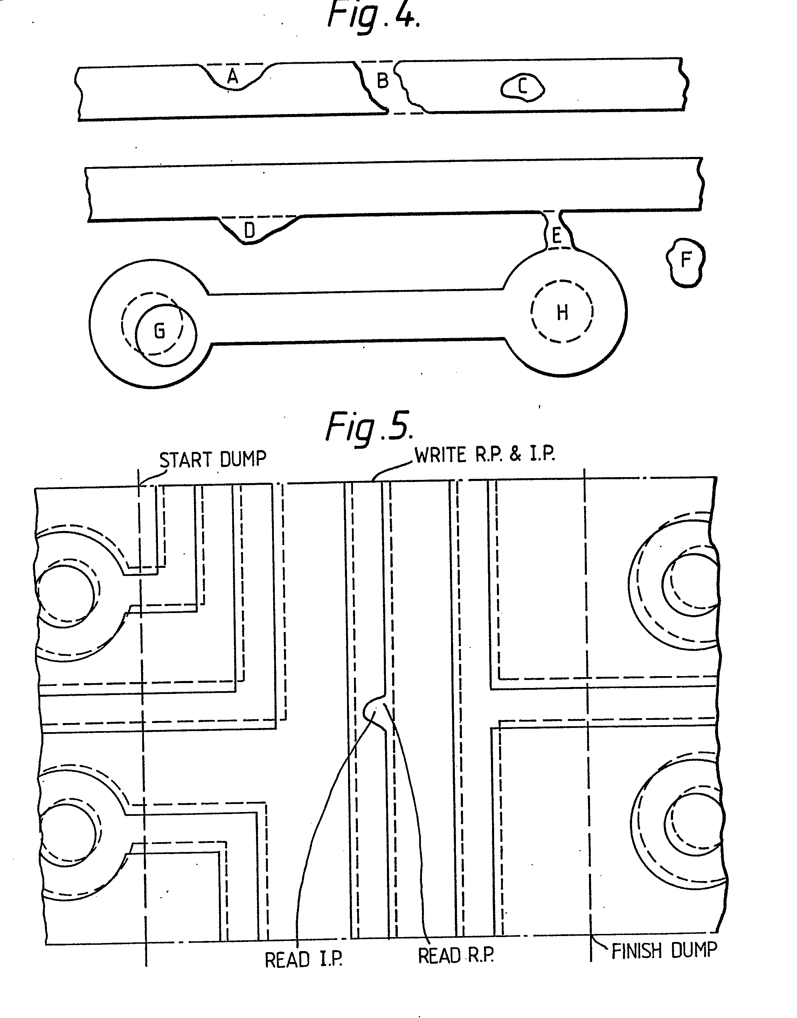

Referring now to Figure 3, each scanning head 16, 17 includes a lamp 20 the output of which is transferred via a fibre-optic arrangement 21. This fibre-optic array directs light onto lens elements 22 and 23 which include a beam splitting surface 24. Light reflected back to the scanning head by the RP or IP is reflected from surface 24 onto a mirror 25 and thence via a lens 26 into a linear CCD array 27.

In the present example the imaging system gives a magnification of 0.65 resulting in an object pixel size of 20 microns. The CCD array detects 2048 pixels in a row, giving an object line 41 mm long in the X-axis. This size is chosen to give a balance between flaw detection resolution and scanning speed. The scan pattern of the scanning heads is boustrophedon.

Figure 4 shows some typical flaws which can arise in PCBs. The Inspection Pattern is shown in solid lines and the Reference Pattern (or correct board) is shown in dotted lines. Each of the faults is labelled and the normally used fault names are now set out with the reference letters.

| Deficit Faults | Excess Faults | Hole Faults |
|---|---|---|
| A. Gouge | D. Bulge | G. Off Centre |
| B. Break | E. Bridge | H. Missing or |
| C. Pinhole | F. Particle | Blocked |

However a simple pixel-by-pixel correlation between the two scanned images is inadequate for proper testing. This is because several other factors can cause consistance differences to be detected between the Inspection and Reference Patterns. These can be considered as alignment problems and are:

1. Manufacturing tolerances and imperfect adjustment of mechanical and optical elements of the inspection machine (image sensor, lenses, board holding fixtures, camera transport, etc.),

2.  Manufacturing tolerance in the PCB
(Registration between pattern, locating holes and
component holes).

The second item will vary from board to board.
Both items may vary with time, temperature, humidity, etc.

In addition to pattern translation in the X and Y
axes, two other types of pattern differences may occur:

1.  Scalar differences in the X-axis.  This is
caused by different magnifications in the two cameras
due to optical path length.

2.  Pattern rotation in the X-Y plane.

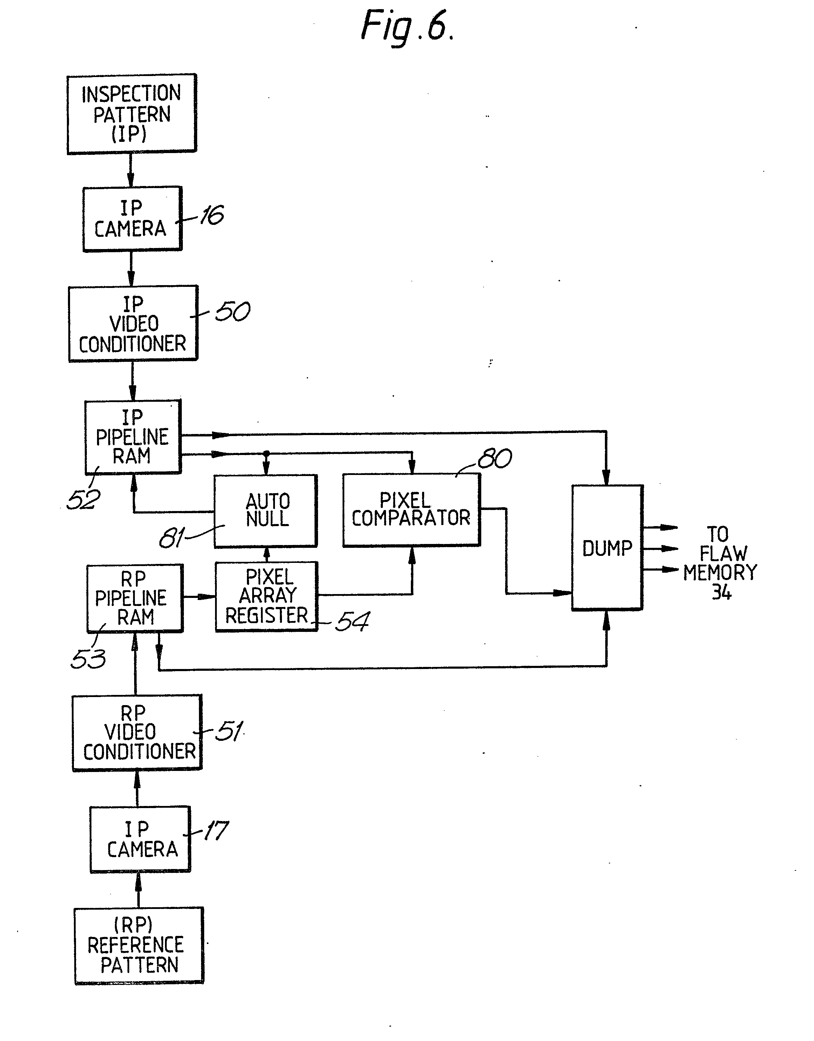

Errors of this type are shown in Figure 5 of the
accompanying drawings with again the Inspection Pattern
being shown in continuous lines and the Reference Pattern
in dotted lines.

It is thus apparent that before any accurate
comparison between the Inspection Pattern and the Reference
Pattern can be made that these further variations have to
be accounted for.  Effectively the bit patterns generated
by the two scanning heads of the machine have to be brought
into alignment.  This is done electronically by providing
four feedback loops which sense, and control, X and Y
offsets  at the start and end of each line scan, with
linearly interpolated offsets throughout the line scan.
By appropriately inserting offsets into the bit pattern
generated from the Inspection Pattern the two patterns
can be brough into alignment to enable the detection of
flaws in the Inspection Pattern.

Misalignment between 2 planar patterns in the
same plane ranges from simple offsets to complex
distortions.  The common ones are:

1. X offset
2. Y offset
3. Rotation
4. X compression
5. Y compression
6. Keystone Distortion
7. Shear (parallelogram) distortion in X
8. Shear distortion in Y
9. Pincushion OR barrel distortion

In the example embodiment, only the first four of these are significant: the others are held to negligible magnitudes by the mechanical and optical design, and by the compensating effect of two identical optical systems.

The present invention is a means for correcting for any or all of these distortions electronically, in real time or on stored images, by processing the scan data as it comes from cameras or from storage. The pattern alighment is achieved automatically and continuously by feedback loops which sense different aspects of pattern offsets and reduce the offsets for an optimum pattern match. In the example embodiment, four feedback loops correct for the first four types of misalignment: X offset, Y offset, Rotation and X compression.

In the example embodiment there are interacting feedback loops which sense offsets of four types, and produce compensating offsets of four types. The four sensed parameters are not the same as the output parameters, so cross coupling is required between loops, thus:

Sensed Parameters:                    Output Parameters:

X offset, start of Scan - Controls $\to$ X start offset
X offset, end of Scan - Controls $\to$ X slope (X compression)
Y offset, start of Scan - Controls $\to$ Y offset
Y offset, end of Scan - Controls $\to$ Y slope (Y rotation)

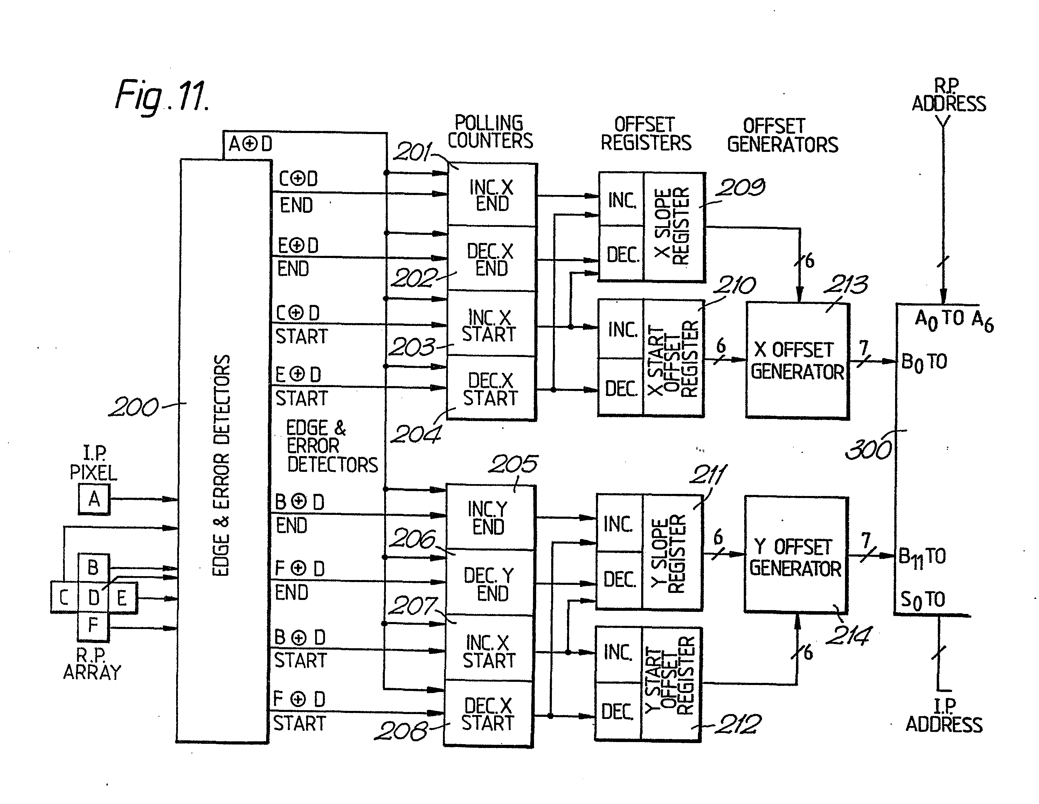

These cross couplings are indicated in Figure 11. The end of scan and start of scan refer to the start and end of the 2048 pixel line scanned by the CCD Array. The need for such cross coupling stems from the nature of practical means of achieving compression and tilt (rotation): in the embodiment being described the circuit used affects primarily the end of scan, with the effect tapering linearly to zero at the start of scan.

The pertinent four forms of misalignment listed are linear, as are the transforms which correct for them. The correction transforms can be collectively expressed by the matrix $\begin{vmatrix} a & b & c \\ d & e & f \\ 0 & 0 & 1 \end{vmatrix}$ where the coefficients a - f represent:

a    Compression in X

b    Rotation in X

c    Offset in X

d    Rotation in Y

e    Compression in Y

f    Offset in Y

In the present embodiment, this matrix can be simplified because of special conditions in the scanning method. For example, compression in Y is negligible because the two scanning heads, rigidly tied together and scanning in the Y axis, effectively cancel Y compression. Thus the coefficient e becomes 1.

Rotation in X, on the other hand, may be very significant in magnitude, but changes relatively slowly, because the scanning moves one pixel in Y for every 2048 pixels in X. Thus in the present embodiment, the feedback loops which control offset in X (coefficient c) are fast enough to effectively compensate for rotation in X: that is, c becomes a slowly changing variable to compensate for the lack of circuits to mechanize the function of coefficient b. This enables us to simplify
the transform matrix to

$$\begin{vmatrix} a & 0 & c \\ d & 1 & f \\ 0 & 0 & 1 \end{vmatrix}$$

All of the "constants" are, in fact, slowly changing
variables, which enables the present embodiment to
compensate for the other five forms of misalignment,
to whatever small degree they exist, as well as slight
variations in s due to curvature in the RP and IP. The
function of the feedback loops is to monitor the
effectiveness of the transform and increment and decrement
the "constants", a, c, d and f to maintain optimum pattern
match.

It will be recalled that the scan pattern
described is that of a strip 2048 pixels long in the
X-direction and one pixel wide in the Y-direction, the
actual strip being moved in the Y-direction in a boustrophedon reversing scan alternating with a shift in the
X-direction. As the X-Y transport mechanism carries the
scanning heads over the PCBs the linear image sensor array
in each scanning head is scanned electronically to
produce a video output. The video output from the two
detection arrays 27 in the two scanning heads 16 and 17
is converted into binary digital data streams.

The manner in which these data streams are
handled will now be described with reference to the block
diagram of Figure 6, which shows in greater detail the
flaw detector electronics 35 shown in block form in
Figure 2.

The analogue pixel data streams from the two
scanning heads 16 and 17 are converted into 1-bit digital
data streams in an IP (Inspection Pattern) video
conditioner 50 and RP (Reference Pattern) video
conditioner 51. The digital data streams are then fed
into serial RAMs 52, 53 which can effectively be
considered as pipelines in which the digital signals are delayed by temporary storage. This delay means that when a flaw is detected data on the area surrounding the flaw is available to be dumped into the flaw memory 34. Each of the pipeline RAMs 52, 53 consists of 128 K Byte of RAM. Data is alternately written and read, with the address counting through the 128 K address field. However, the read address is arranged to differ from the write address by approximately 64 K with the result that each RAM functions as a simulated shift register with the output tap in the middle. Thus each pipeline RAM 52, 53 holds 512 scan lines covering a broad area of 10mm x 40mm. When a flaw is detected by the pixel comparator a block of 512 x 2048 pixels (10mm x 40mm) with the flaw in the centre is dumped into the flaw memory 34 from each pipeline.

The data from the pixel array register 54 is compared with the data from the IP pipeline RAM 52 for the purpose of flaw detection. This is done in a pixel comparator 80. However, as previously explained this comparison is not valid unless a number of potential alignment errors between the Inspection PCB and the Reference PCB have been compensated. This is the task of the alignment circuit shown at 81.

The alignment circuit 81 acts to align the two scanned bit patterns. The alignment only takes place one point at a time and the mathematical basis of this alignment has been discussed.

When attempting to compare repetitive patterns (such as herringbone pattern) a risk exists that the alignment circuit might displace the patterns by one pattern repetition cycle, thus attempting to compare features which are similar but do not correspond on the RP and IP. To prevent this, the adjustment circuit has an adjustment range which is limited to something less than the likely width of pattern features to be compared, but greater than the expected maximum displacement between RP and IP.

In the present embodiment the feature selected is the distribution of edges. By considering a pixel of the Reference Pattern and comparing it with its four neighbouring pixels above, below and on either side of it it can be determined whether or not the pixel is on an edge, and also the orientation of the edge.

Figure 9 of the drawings shows a pixel D of the Reference Pattern and its four neighbouring pixels B, C, E and F. To compare pixel D with each of its neighbours requires four edge detectors. As these are all similar Figure 9 only shows one such detector, which is referred to as the E ≠ D detector, which comprises an exclusive-OR gate. Thus if an edge lies between E and D they will differ and the output of exclusive-OR gate 90 goes high. This indicates the presence of an edge but not its location in the scan line, that is, is it at the start or the end of the scan line? This is decided by the two subsequent gates 91 and 92. If the output of gate 90 goes high during the first quarter of the line scan the output of gate 92 goes low to indicate an edge, at the start of a scan line, whilst if the output of gate 90 goes high during the last quarter then the output of gate 91 goes low to indicate the edge at the end of a scan line

Having established a way of detecting the presence, orientation, and location of an edge on the Reference Pattern this can now be used to align the two patterns, bearing in mind the mathematical analysis already mentioned. As only edges are being considered, the alignment circuit 81 takes no action whenever pixel D is not on an edge. Whenever pixel D is on an edge, then the alignment circuit 81 compares pixel D with the corresponding pixel in the Inspection Pattern. If the two pixels are the same, then again no further action is taken. If, however, they are different then an error has been detected. The error detector is simply an exclusive-OR gate which compares the IP pixel with the central pixel of the RP array. A single error of this nature is insufficient to indicate the presence of an alignment error. The alignment circuit 81 thus includes eight polling counters, one of which is shown in Figure 10 of the accompanying drawings. The provision of 8 polling counters provides for incrementing or decrementing each of 4 types of offsets, making 8 possibilities in all. Thus the purpose of the polling counters is to discriminate between local pattern differences such as flaws and consistent, repetitious pattern differences which indicate offsets or misalignment.

Figure 10 shows a polling counter for detecting left-hand offset of the Inspection Pattern. It is assumed that as before pixel A is a pixel from the Inspection Pattern which is being compared with pixel D of the Reference Pattern. The polling counter comprises an Up/Down counter 100, a NOR-gate 101 and a flip-flop 102 and operates in the following manner.

1. If a pixel C differs from pixel D, then a pattern edge (a "one" on one side, a "zero" on the other) lies between C and D. Therefore E ≠ D is low and enables input 104 which is the count-enable input.

2. If, at the same time, pixel A (IP) differs from pixel D (RP), (and therefore pixel A agrees with pixel C) then the RP, at the edge, is offset to the left of the RP, A ≠ D is high, CEP is low, and UP/DOWN input 105 is high, and the counter is incremented.

3. If, on the other hand, pixel A (IP) agrees with pixel D (RP) when C ≠ D is low (an edge lies between C and D) then the UP/DOWN input 105 is low, so the counter is decremented.

4. If good edges (C ≠ D, D = A) predominate over bad edges (C ≠ D, D ≠ A), then the counter counts down to zero, whereupon feedback from the Terminal Count output 106 via the NOR-gate 101 to the clock-enable parallel input 107 inhibits further counting down.

5. If, on the other hand, bad edges (C ≠ D, D ≠ A) predominate, the counter counts up until, at the count of 8, output Q3 goes high. This resets the counter via flip-flop 102 and input 108 and increments an X-slope register to increment the X-offset at the end of line scan.

Two operating modes are provided. Slew mode is provided for quick pattern matching when scanning starts on a new PCB. When a fairly good pattern match is achieved, the circuit switches to Track mode, which shifts patterns more cautiously for a more precise pattern match. In Slew mode, when the counter counts to 8, it resets to 6 so it only needs a majority of 2 bad edges for each offset increment. In Track mode when the counter counts to 8 it resets to zero so that a majority of 8 bad edges are needed to produce an offset increment.

The offset registers are shown in the block diagram of alignment circuit 81, this block diagram being Figure 11. In this diagram the four edge detector circuits are shown in block 200. The edge detector circuits give 8 outputs as indicated to eight polling counters 201 to 208.

The inputs to the polling counters are shown in the Figure so that polling counter 201 responds to end edges detected between C ≠ D, that is it corresponds to the polling counter shown in Figure 10. If this polling counter detects an offset, then in order to compensate for the offset it will be necessary to increment X at the end of a scan line. Conversely polling counter 202 if detecting offsets will need to decrement X at the end of a scan line. The remaining polling counters function as follows: 203 increments X at start of a scan line, 204 decrements X at start of a scan line, 205 increments Y at the end of a scan line, 206 decrements Y at the end of a scan line, 207 increments X at the start of a scan line, and 208 decrements X at the start of a scan line.

The outputs of the polling counter are connected to four offset registers 209-212. These are merely counters which are incremented or decremented by the respective outputs from their associated polling counters, their increment inputs being shown at I and their decrement inputs at D.

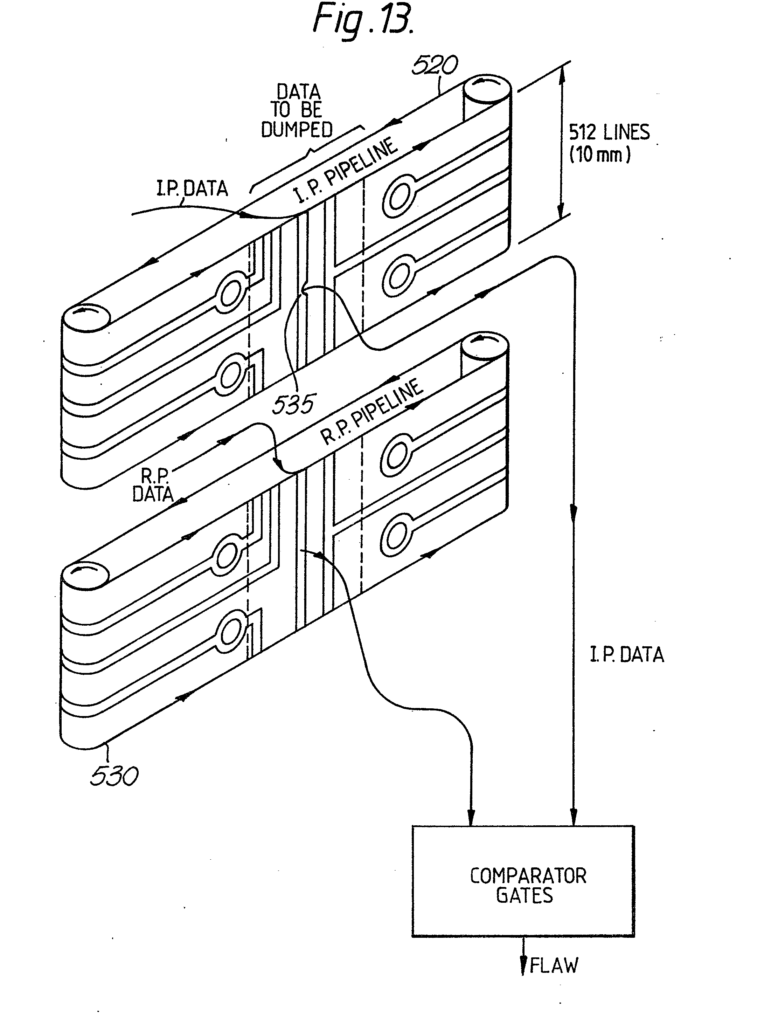

The counts of the offset registers 209, 210 are supplied to an X offset generator 213, and the counts of offset registers 211, 212 to a Y offset generator 214. As these are identical only one is shown in greater detail in Figure 12, this being the X-offset register 213.

The offset register comprises an adder 250 and a latch 251 which together form an overflow rate generator. This produces overflow pulses at a rate proportional to the X-slope input from X-slope offset register 209. The counter 252 counts the overflow pulses to produce a digital ramp with a slope proportional to the X-slope input, starting at zero-count at the start of each line scan.

The second adder 253 combines this ramp with the X-start count to produce X-offset. This offset takes the form of a digital ramp, starting at count X-start and ending at count (X-start + X-slope).

There is thus available at the outputs of the offset generators 213 and 214 values which indicate the corrections which have to be made to the Inspection Pattern to bring it into alignment with the Reference Pattern.

This alignment is carried out in the IP offset adder 300. This adder combines the Reference Pattern read address with the X and Y offsets generated by circuit 81 to produce the read address for the Inspection Pattern.

It will be remembered that the pipeline RAMs 52 and 53 each contain 512 x 2048 pixels or approximately $2^{20}$ pixels. To address one of these RAMs thus requires a 20 bit address. Of these bits $A_0$ to $A_{10}$ provide location within one line scan. Therefore the 7 bits of X-offset output from X-offset generator 213 are added to address bits $A_0$ to $A_6$ to give X-axis offset. Bits $A_{11}$ to $A_{19}$ select a line scan line. Therefore the 7 bits of the Y-offset generator 214 are added to address bits $A_{11}$ to $A_{17}$ to give Y-axis offset.

This is done in the IP offset adder 350 which receives the Reference Pattern input address at 352 and gives the corrected Inspection Pattern read address at 352. These addresses are, of course, input and output in 20 parallel lines.

The output of the IP pipeline RAM 52 as read by the corrected addresses from the IP offset adder 350 is now available to be compared in a meaningful way with the output of the RP pipeline RAM 53 in the pixel comparator 80.

The final result of the scanning and comparison procedure which has been described is symbolically shown in Figure 17 of the drawings. In this figure the Inspection Pattern data in the Inspection Pattern pipeline RAM 52 is shown at 520, and the corresponding Reference Pattern data at 530. Each strip of data is effectively 512 scan lines wide, thus representing 10mm across the respective Inspection and Reference Patterns. A flaw in the Inspection Pattern is shown at 535 and the area surrounding the flaw represents all the data to be dumped into the flaw memory 34.

It will be emphasised that whilst the above description has been concerned with inspecting PCBs, the principles of image alignment may be used in many other fields.

## CLAIMS

1. Apparatus for comparing two patterns translated into electronic data streams, one pattern being a Reference Pattern with which the other pattern, referred to as an Inspection Pattern, is to be compared, the apparatus comprising: means for reading each of the patterns pixel by pixel, and being characterised in that it includes first comparison means (90) for comparing a Reference Pattern pixel with a plurality of adjacent pixels in the Reference Pattern to determine the presence or absence of edges, means (80) for comparing pixels of the Reference Pattern with nominally corresponding pixels of the Inspection Pattern to determine whether or not the pixels are the same, and alignment means (81) for automatically incrementing or decrementing the coordinates of the pixels of the Inspection Pattern to compensate for discrepancies between edges in the Reference Pattern and nominally corresponding edges in the Inspection Pattern thereby to bring the two patterns into effective alignment.

2. Apparatus as claimed in Claim 1, and characterised in that said first comparison means (90,91,92) comprise means for comparing a pixel in the Reference Pattern with the four pixels surrounding it to determine the presence or absence of an edge and, if an edge is present, the orientation of the edge.

3. Apparatus as claimed in Claim 2, and characterised in that it includes means (16,17) for reading the Reference and Inspection Patterns serially, and first and second serial Random Access Memories (RAMs) (52,53) into which the serially arranged Reference and Inspection Patterns are written.

4. Apparatus as claimed in Claim 3, and including means (100,101,102) for discriminating between local pattern differences between the Reference and Inspection Patterns and repetitious pattern differences which indicate offsets or misalignment.

5.    Apparatus as claimed in Claim 4, and characterised in that said means for discriminating comprise a plurality of polling counters (100), each polling counter being capable of either incrementing or decrementing in response to one of a plurality of different offsets.

6.    Apparatus as claimed in Claim 5, and characterised in that there are eight polling counters.

Fig.1.

# Fig.2.

Fig.3.

DIRECTION OF SCAN
Y ←——— ———→ Y

Fig.12.

START OF
X SCAN

X SLOPE    →  A    ADDER   250
                B    S    C

MR
COUNTER.    252
Qx

X START
OFFSET

CLOCK    →    LATCH    251

A    253
ADDER    S    →    X OFFSET

B

## Fig.4.

## Fig.5.

START DUMP

WRITE R.P. & I.P.

READ I.P.

READ R.P.

FINISH DUMP

5/9

# Fig.6.

0246832

Fig.7.

Fig.9.

Fig.10.

# Fig.8.

ARRAY REGISTER ADDRESS

R.P. DATA } FROM PIPELINE DELAY RAM

LATCH

P/S SHIFT REGISTER — 72

S/P SHIFT REGISTER — 73 → 3 BITS → B

8 BIT

LATCH

256 x 8 BIT RAM — 70

P/S SHIFT REGISTER — 72

S/P SHIFT REGISTER — 73 → 5 BITS → C, D, E

8 BIT ADDRESS LINE — 71

LATCH

256 x 8 BIT RAM — 70

72

73 → 7 BITS → F

TO COMPARATOR GATES & AUTO NULL

Fig. 11.

Fig. 11 — Block diagram showing R.P. ADDRESS, I.P. ADDRESS, OFFSET GENERATORS (X OFFSET GENERATOR 213, Y OFFSET GENERATOR 214), OFFSET REGISTERS (X SLOPE REGISTER 209, X START OFFSET REGISTER 210, Y SLOPE REGISTER 211, Y START OFFSET REGISTER 212), POLLING COUNTERS (INC.X END 201, DEC.X END 202, INC.X START 203, DEC.X START 204, INC.Y END 205, DEC.Y END 206, INC.X START 207, DEC.X START 208), EDGE & ERROR DETECTORS 200, and the I.P. PIXEL / R.P. ARRAY with pixels A, B, C, D, E, F.

# Fig.13.